(19) Europäisches Patentamt
European Patent Office
Office européen des brevets

(11) Veröffentlichungsnummer: **0 380 984 A1**

(12) # EUROPÄISCHE PATENTANMELDUNG

(21) Anmeldenummer: **90101122.1**

(22) Anmeldetag: **20.01.90**

(51) Int. Cl.5: **A01N 43/70, A01N 57/20, A01N 33/12**

Patentansprüche für folgenden Vertragsstaat: ES.

(30) Priorität: **01.02.89 DE 3902884**

(43) Veröffentlichungstag der Anmeldung: **08.08.90 Patentblatt 90/32**

(84) Benannte Vertragsstaaten: **AT BE CH DE DK ES FR GB GR IT LI NL SE**

(71) Anmelder: **RIEDEL-DE HAEN AKTIENGESELLSCHAFT
Postfach
D-3016 Seelze 1(DE)**

(72) Erfinder: **Lindner, Wolfgang, Dr.
Leinestrasse 3
D-3016 Seelze 1(DE)**
Erfinder: **Neumann, Frank
Gerhart-Hauptmann-Strasse 12
D-3016 Seelze 2(DE)**
Erfinder: **Taschenbrecker, Erich
Bordenauer Weg 23
D-3050 Wunstorf 2(DE)**

(74) Vertreter: **Urbach, Hans-Georg, Dr. et al
CASSELLA AKTIENGESELLSCHAFT
Patentabteilung Hanauer Landstrasse 526
D-6000 Frankfurt am Main 61(DE)**

(54) **Flüssige algizid wirkende Zubereitung.**

(57) Die flüssige algizid wirkende Zubereitung enthält
als Komponente A: 2-Methylthio-4-cyclopropylamino-6-tertiärbutylamino-1,3,5-triazin,
als Komponente B: mindestens eine biozid wirksame quaternäre Ammonium- oder Phosphoniumverbindung,
als Komponente C: mindestens ein mit Wasser mischbares Lösemittel, wobei die Zubereitung die Komponenten (A + B) zu 10 bis 80 Gew.% enthält und das Gewichtsverhältnis A : B = 1 : (2 bis 100) beträgt.

EP 0 380 984 A1

## Flüssige algizid wirkende Zubereitung

Die vorliegende Erfindung betrifft eine insbesondere algizid wirkende flüssige Zubereitung, die zur Bekämpfung vor allem von Algen, darüberhinaus aber auch von Moosen, Flechten und dgl. auf Flächen, wie z.B. auf Wegen, Tennisplätzen, Sportlaufflächen, Fassaden, Dächern, Steinflächen, Holzoberflächen usw. geeignet ist.

Zur Algenbekämpfung in Teichen sind Kupfersulfat und Kaliumpermanganat bekannt. Diese sind zur langdauernden Verhinderung des Algenbewuchses auf Steinflächen usw. aus verschiedenen Gründen (z.B. zu rasche Auswaschung, Farbe, Übergang in Braunstein im Falle des Kaliumpermanganats) nicht besonders geeignet.

Zur Verhinderung des Algenbewuchses in Schwimmbädern sind Chloramin T, Chlorkalk, Kalium-Natriumhypochlorit oder Chlorisocyanursäuren bekannt, die durch Abspaltung von Chlor wirken. Sie sind zur langdauernden Verhinderung des Algenbewuchses auf Steinflächen, Fassaden und dgl. nicht geeignet.

Schwermetallhaltige Verbindungen, wie Tributylzinnoxid und dessen Umsetzungsprodukte mit Carbonsäuren, werden zur langdauernden Verhinderung von Algenbewuchs auf Steinflächen eingesetzt. Aufgrund der toxikologischen Daten dieser Verbindungen und aus ökologischen Gründen ist ihr Einsatz aber problematisch.

Es ist bekannt, quaternäre Ammonium- oder Phosphoniumsalze zur Bekämpfung von Algen einzusetzen. Nachteilig ist jedoch, daß sie aufgrund ihrer guten Wasserlöslichkeit nicht auf der mit ihnen behandelten Fläche verblei ben und diese daher nach kurzer Zeit erneut bewachsen werden kann.

Die Verbindung 2-Methylthio-4-cyclopropylamino-6-tertiärbutylamino-1,3,5-triazin (vgl. z.B. DE-OS 19 14 014), im nachfolgenden zumeist mit der Abkürzung "Mctt" bezeichnet, besitzt ein breites Wirkungsspektrum gegen Algen und Moose. Die Verbindung wirkt durch Unterbrechung der Photosynthese und kann daher einen bereits aufgetretenen Algen- und Moosbewuchs nicht schnell genug entfernen. Nachteilig ist ferner, daß Mctt wasserunlöslich ist. Es ist bekannt, Mctt in einer polyethoxylierten Komponente, wie Polyethylenglykol-ölsäureester, durch Mahlung fein zu verteilen (vgl. DE-OS 35 39 118). Die so hergestellten Pasten bzw. Suspensionen sind jedoch nicht unbegrenzt lagerfähig. Beim Aufbringen auf eine Fläche ist so eine gleichmäßige Verteilung nicht gewährleistet, insbesondere dringt der Wirkstoff nicht in die Mikroporen der Oberfläche ein, die den Sporen der Mikroorganismen Lebensraum zum Auskeimen bieten. Die relativ großen Wirkstoffteilchen werden leicht von der Oberfläche durch äußere Einwirkungen, wie Wind und Regen, wieder entfernt, so daß eine gewünschte Dauerwirkung nicht gegeben ist.

Mctt läßt sich in organischen Lösemitteln, wie z.B. Dichlorethan, Glykolethern, Glykolestern usw., lösen. Diese Lösungen sind aber nicht wasserverdünnbar, ohne daß der Wirkstoff grob auskristallisiert, und enthalten teilweise toxische Lösemittel, die aus ökologischen Gründen nicht in die Umwelt gelangen dürfen.

Es besteht somit ein Bedarf an schwermetallfreien, chlorfreien wasserverdünnbaren lagerstabilen flüssigen Mitteln, die insbesondere vorhandenen Algen-, aber auch Moos- oder Flechtenbewuchs auf Flächen, wie Wegen, Tennisplätzen, Sportlaufflächen, Fassaden, Dächern, Steinflächen usw., abtöten und einen erneuten Bewuchs langdauernd verhindern können. Durch die vorliegende Erfindung wird ein derartiges Mittel zur Verfügung gestellt.

Die Erfindung betrifft eine flüssige, insbesondere algicid wirkende Zubereitung, enthaltend

a) als Komponente A: 2-Methylthio-4-cyclopropylamino-6-tertiärbutylamino-1,3,5-triazin der Formel I

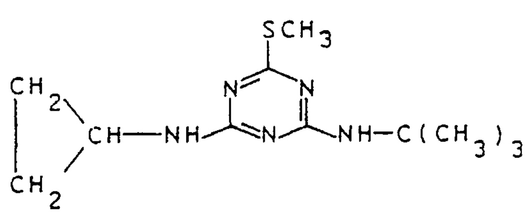

(I)

b) als Komponente B: mindestens eine biozid wirksame quaternäre Ammonium- oder Phosphoniumverbindung,

c) als Komponente C: mindestens ein mit Wasser mischbares Lösemittel, wobei die Zubereitung die Komponenten (A + B) zu 10 bis 80 Gew.% enthält und das Gewichtsverhältnis A : B = 1 : (2 bis 100) beträgt.

Die erfindungsgemäße flüssige Zubereitung enthält die Komponenten (A + B) vorzugsweise zu 20 bis

50 Gew.% ganz besonders bevorzugt zu 25 bis 50 Gew.%. (Unter der Angabe "(A + B)" wird die Summe der Komponenten A und B verstanden.) Das Gewichtsverhältnis der Komponente A zu der Komponente B beträgt vorzugsweise 1 : (3 bis 20), ganz besonders bevorzugt 1 : (5 bis 10).

Die Komponente A besteht aus Mctt. Es ist handelsüblich und wird in handelsüblicher Form eingesetzt.

Die Komponente B besteht mindestens aus einer biozid wirksamen quaternären Ammonium- oder Phosphonium-Verbindung. Auch derartige Verbindungen sind handelsüblich und werden in handelsüblicher Form eingesetzt. Die Komponente B kann auch zwei oder mehrere derartige Verbindungen enthalten.

Die Verbindungen der Komponente B besitzen insbesondere die Formel II

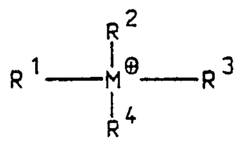 $X^{\ominus}$ (II)

worin

M Stickstoff oder Phosphor und

$X^{\ominus}$ ein Anion

bedeuten und wobei von den Resten $R^1$ bis $R^4$ mindestens einer höhermolekularer Natur ist, z.B. einen aliphatischen Rest mit 8 bis 22 C-Atomen, vorzugsweise 8 bis 18 C-Atomen, bedeutet, und durch Heteroatome und/oder durch Ester- und/oder Amidbrücken unterbrochen oder über einen aromatischen Rest oder über ein heterocyclisches Ringsystem an das quaternäre Atom $M^{\oplus}$ gebunden sein kann und die drei anderen Reste entweder je einen gegebenenfalls substituierten und/oder ein- oder mehrfach durch Sauerstoff unterbrochenen aliphatischen Rest mit jeweils 1 bis 12 C-Atomen, vorzugsweise 1 bis 10 C-Atomen, ganz besonders bevorzugt Methyl, gegebenenfalls substituiertes Aryl oder Aralkyl bedeuten oder 2 oder 3 der verbleibende Reste zusammen mit dem quaternären Atom $M^{\oplus}$, an das sie gebunden sind, einen gegebenenfalls ein- oder mehrfach substituierten heterocyclischen Ring bilden.

Das Anion $X^{\ominus}$ kann beliebig sein und z.B. Chlorid, Bromid, Iodid, Acetat, Propionat, Nitrat, Hydrogensulfat, Hydrogensulfit bedeuten. Vorzugsweise bedeutet $X^{\ominus}$ Chlorid oder Bromid.

In der Formel II bedeutet mindestens einer der Reste $R^1$ bis $R^4$ einen lipophilen, höhermolekularen Rest, z.B. einen linearen oder verzweigten aliphatischen Rest mit 8 bis 22 C-Atomen, vorzugsweise 8 bis 18 C-Atomen, insbesondere einen Fettalkylrest mit 8 bis 22 C-Atomen, vorzugsweise 8 bis 18 C-Atomen. Die Kohlenwasserstoffkette dieses längerkettigen lipophilen bzw. hydrophoben Restes kann auch durch Heteroatome, wie Sauerstoff, Schwefel, Stickstoff und/oder durch Ester- und/oder Amidbrücken usw. unterbrochen sein, und/oder sie kann auch über einen aromatischen Rest, z.B. Phenyl, oder über ein heterocyclisches Ringsystem an das quaternäre Zentralatom $M^{\oplus}$ gebunden sein.

Die Fettalkyl- und aliphatischen Reste in der Formel II können geradkettig oder verzweigt und gesättigt oder ungesättigt sein. Bevorzugt sind geradkettige oder verzweigte Alkyl- oder Alkenyl-Reste. Insbesondere die Alkylreste können auch substituiert sein, vor allem durch OH, und/oder ihre Kohlenstoffkette kann ein- oder mehrfach durch Sauerstoff unterbrochen sein. Beispiele für -derartige substituierte und/oder unterbrochene Alkylreste sind Hxdroxyethyl, Hydroxypolyethoxyethyl, Hydroxypolypropoxypropyl. Beispiele für geeignete Verbindungen mit derartigen Resten sind: Di-(N-Hydroxyethyl)-N-dodecyl-N-benzyl-ammoniumchlorid, Diisobutylphenoxyethoxyethyl-dimethyl-benzyl-ammonium-chlorid, Didecyl-methyl-hydroxyethoxyethyl-ammoniumpropionat, Di-(N-2-Hydroxypropyl)-dodecyl-benzyl-ammoniumchlorid, Di-(N-Hydroxypropoxypropyl)-dodecyl-benzyl-ammoniumchlorid, Di-(N-Hydroxypolyethoxyethyl)-dodecyl-benzyl-ammoniumchlorid.

Die an das quaternäre Zentralatom $M^{\oplus}$ gebundenen Aryl-oder Aralkylreste sind vorzugsweise Phenyl-, Benzyl- oder 2-Phenethyl-Reste, die im Phenylkern auch substituiert sein können, vorzugsweise durch Halogen, insbesondere Chlor.

Bevorzugte Verbindungen der Formel II sind z.B. Verbindungen der Formeln IIa bis IIc:

$R^5_m N^{\oplus}(CH_3)_{(4-m)} Y^{\ominus}$ (IIa)

$R^5_m N^{\oplus}(CH_3)_{(3-m)}CH_2C_6H_5 Y^{\ominus}$ (IIb)

$R^5 N^{\oplus}(CH_3)_2CH_2CH_2C_6H_5 Y^{\ominus}$ (IIc)

worin

$R^5$ einen aliphatischen Rest mit 8 bis 22 C-Atomen, vorzugsweise 8 bis 18 C-Atomen,

Y Chlor oder Brom, vorzugsweise Chlor,

m 1, 2 oder 3

bedeuten.

Beispiele für geeignete Verbindungen der Formeln II, IIa bis IIc sind:
Dioctyl-dimethylammoniumchlorid,
Didecyl-dimethylammoniumchlorid,
Didodecyl-dimethylammoniumchlorid,
Ditetradecyl-dimethylammoniumchlorid,
Dihexadecyl-dimethylammoniumchlorid,
Dioctadecyl-dimethylammoniumchlorid,
Dioleyl-dimethylammoniumchlorid,
Dikokosfettalkyl-dimethylammoniumchlorid,
Benzyl-kokosfettalkyl-dimethylammoniumchlorid,
Tridecyl-methylammoniumchlorid,
Tridodecyl-methylammoniumchlorid,
Decyl-trimethyl-ammoniumchlorid,
Dodecyl-trimethyl-ammoniumchlorid,
Tetradecyl-trimethyl-ammoniumchlorid,
Hexadecyl-trimethyl-ammoniumchlorid,
Octadecyl-trimethyl-ammoniumchlorid,
9-Octadecenyl-trimethyl-ammoniumchlorid,
Talgfettalkyl-trimethyl-ammoniumchlorid,
Soyaölalkyl-trimethyl-ammoniumchlorid,
Kokosfettalkyl-trimethyl-ammoniumchlorid,
Benzyl-tetradecyl-dimethylammoniumchlorid,
Benzyl-octadecyl-dimethylammoniumchlorid,
Benzyl-tetradecyl-dimethylammoniumbromid,
Didecyl-dimethylammoniumbromid,
Dodecyl-benzyl-dimethyl-ammoniumchlorid,
Dodecyl-benzyl-dioctadecyl-ammoniumchlorid.

In der allgemeinen Formel II können zwei der Reste zusammen mit dem zentralen Atom, an das sie gebunden sind, auch ein heterocyclisches Ringsystem, wie z.B. Piperidin oder Morpholin, bilden. Drei der Reste können zusammen mit dem zentralen Stickstoffatom, an das sie gebunden sind, auch ein aromatisches heterocyclisches Ringsystem, wie z.B. Pyridin oder Chinolin, bilden. Der längerkettige lipophile Rest kann dabei direkt an das quaternäre Atom oder über das heterocyclische Ringsystem gebunden sein. Das heterocyclische Ringsystem kann auch einen oder mehrere, insbesondere zwei weitere Substituenten, insbesondere aliphatische Reste mit 1 bis 10 C-Atomen, tragen.

Bevorzugte Verbindungen der allgemeinen Formel II mit heterocyclischem Ringsystem sind z.B. solche der Formel IId

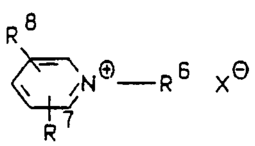

(IId)

worin

X⊖ ein beliebiges Anion, insbesondere Bromid oder Chlorid, einer der Reste $R^6$, $R^7$, $R^8$ ein aliphatischer Rest mit 8 bis 18 C-Atomen und $R^7$, $R^8$ darüber hinaus auch Wasserstoff oder einen aliphatischen Rest mit 1 bis 10 C-Atomen bedeuten.

Besonders bevorzugte Verbindungen der Formel IId sind solche, bei denen $R^7$ in 2-Stellung des Pyridiniumringes steht, und insbesondere solche, bei denen $R^7$ in 4-Stellung des Pyridiniumringes steht, und $R^8$ Wasserstoff bedeutet.

Beispiele für geeignete Verbindungen der Formel IId sind:
4-Pentadecyl-N-methyl-pyridinium-bromid,
4-Heptadecyl-N-ethyl-pyridinium-bromid,
4-Tridecyl-N-propyl-pyridinium-bromid,
4-Tridecyl-N-allyl-pyridinium-chlorid,
4-(1-Hexyldecyl)-N-butyl-pyridinium-bromid,

4-(2-Methyloctyl)-N-hexyl-pyridinium-bromid,
4-Ethyl-N-octyl-pyridinium-bromid,
4-Hexyl-N-octyl-pyridinium-bromid,
4-Methyl-N-hexadecyl-pyridinium-chlorid,
N-Octyl-pyridinium-bromid,
N-(2-Ethylhexyl)-pyridinium-bromid,
N-Dodecyl-pyridinium-chlorid,
N-Hexadecyl-pyridinium-bromid,
N-Hexadecyl-pyridinium-hydrogensulfit,
N-Octadecyl-pyridinium-p-toluolsulfonat,
2-Tridecyl-N-butyl-pyridinium-bromid,
2-Heptyl-N-(2-methyloctyl)-pyridinium-bromid,
2-Pentyl-N-decyl-pyridinium-bromid,
2-Methyl-N-dodecyl-pyridinium-bromid,
2,6-Dimethyl-N-dodecyl-pyridinium-bromid,
2-Methyl-5-ethyl-N-hexadecyl-pyridinium-bromid.

Beispiele für geeignete biozid aktive Phosphoniumverbindungen sind:
Tributyl-tetradecyl-phosphoniumchlorid,
Benzyl-dodecyl-dimethyl-phosphoniumchlorid,
Trimethyl-tetradecyl-phosphoniumchlorid,
Trimethyl-hexadecylphosphoniumchlorid,
Benzyl-octadecyl-dimethylphosphoniumchlorid,
Kokosalkyl-tributyl-phosphoniumchlorid.

Für die Komponente B sind die quaternären Ammoniumverbindungen bevorzugt. Sie werden auch als Quats bezeichnet und sind in zahlreichen Literaturstellen beschrieben, so z.B. in Ullmanns Encyklopädie der technischen Chemie, 3. Auflage, Band 5, (1954), Seite 763 - 765, 4. Auflage, Band 10, (1975), Seite 53 bis 54, Band 22, (1982), Seite 496 -497; Kirk-Othmer, Encyclopedia of Chem. Technology, 2nd Edt.: Vol. 2, Seiten 632 - 635, Vol. 16, Seiten 859 -865, Vol. 19, Seiten 562 - 564, 3rd Edt.: Vol. 13, Seiten 233 -235, Vol. 19, Seiten 521 -531.

Phosphoniumverbindungen und ihre Herstellung sind z.B. beschrieben in Ullmann loc. cit., 4. Auflage, Band 18 (1979), Seiten 380 bis 381.

Von den Verbindungen der Formel II werden handelsübliche quaternäre Ammoniumverbindungen mit bekannt guter algizider Wirkung wie z.B. Didecyl-dimethyl-ammoniumchlorid, Dimethyl-dodecyl-benzyl-ammoniumchlorid, Dimethyl-$C_{10}$ bis $C_{14}$-alkyl-benzyl-ammoniumchlorid, N-Hexadecyl-pyridiniumchlorid besonders bevorzugt, wie sie z.B. auch unter verschiedenen Handelsbezeichnungen (z.B. als Dodigen® S 1881, Dodigen® S 2815, Dodigen® S 226; (Dodigen® ist ein eingetragenes Warenzeichen der Firma Hoechst AG) in den Handel kommen. In derartigen Handelsprodukten können die biozid wirksamen quaternären Ammonium- oder Phosphoniumverbindungen auch in Form von Gemischen und/oder in gelöster Form, z.B. in wäßriger oder wäßrig-alkoholischer Lösung vorliegen und können direkt in Form dieser Handelsprodukte zur Herstellung der erfindungsgemäßen Zubereitungen eingesetzt werden.

Die Komponente C besteht mindestens aus einem mit Wasser mischbaren Lösemittel oder enthält mindestens ein mit Wasser mischbares Lösemittel.

Die Angabe mit "Wasser mischbares Lösemittel" bedeutet im Rahmen der vorliegenden Erfindung, daß das Lösemittel entweder vollständig mit Wasser mischbar ist, d.h. beim Mischen mit Wasser keine Mischungslücke auftritt, oder die Mischbarkeit des Lösungsmittels mit Wasser zwar nicht vollständig aber so gut ist, daß beim Verdünnen der erfindungsgemäßen Zubereitung auf Anwendungskonzentration, d.h. im Gewichtsverhältnis 1 : (4 bis 999), innerhalb von 2 Stunden keine Entmischung auftritt.

Geeignete Lösemittel finden sich z.B. in den Reihen der Alkohole; Ketone; Ether; Glykole; Di- und Polyglykole; Polyethylenglykol-polypropylenglykolkondensaten; Ether und Ester von Glykolen, Di- und Polyglykolen, Polyethylenglykol-polypropylenglykolkondensaten.

Geeignete Alkohole sind z.B. Methanol, Ethanol, Propanol, iso-Propanol, tert. Butanol, von denen Propanol und iso-Propanol bevorzugt sind.

Geeignete Ketone sind z.B. Aceton, Methyl-ethyl-keton. Ein geeigneter Ether ist z.B. Methoxybutanol.

Als Komponente C sind solche der Formel III bevorzugt

$R^9 - X - R^{10}$ (III)

worin

X den Rest der Formel

$$-O-(\overset{\displaystyle R^{11}}{\overset{|}{C}}H-CH_2-O\!\!-\!\!)_n \qquad \text{oder}$$

den über zwei Sauerstoffatome gebundenen Rest eines Polyethylenglykol-polypropylenglykolkondensats,
$R^9$, $R^{10}$ unabhängig voneinander Wasserstoff, $C_1$-$C_{18}$-Alkyl, den Acylrest einer $C_1$-$C_4$-Carbonsäure oder ($C_1$-$C_{10}$)Alkyl-phenyl,
$R^{11}$ Wasserstoff oder Methyl,
n eine Zahl von 1 bis 13, vorzugsweise 1 bis 10,
bedeuten.

Beispiele für geeignete Verbindungen der Formel III sind: Ethylenglykol, Diethylenglykol, (=Diglykol), Triethylenglykol, Tetraethylenglykol, Polyethylenglykol mit einem Molekulargewicht bis 600, Propylenglykol, Dipropylenglykol, Tripropylenglykol, Polypropylenglykole, Monomethyl-, -ethyl-, Propyl- und Butyl-ether des Ethylenglykols, Diethylenglykols, Propylenglykols und Dipropylenglykols, wie z.B. Methyl-glykol (=Ethylenglykol-monomethylether), Ethyl-glykol, Propyl-glykol, Butyl-glykol, Methyl-diglkol (Diethylenglykol-monomethylether), Ethyl-diglykol, Butyl-diglykol; Di-($C_1$ bis $C_4$)alkyl-ether des Ethylenglykols, Propylenglykols, Diethylenglykols, Dipropylenglykols, wie z.B. Dimethyl-diglykol (=Diethylenglykol-dimethylether), Diethyldiglykol, Dibutyl-diglykol, Polyethylenglykoldimethylether 250, Nonylphenoxypolyethoxyethanol, Fettsäurealkyloxypolyethoxyethanol.

Weitere Beispiele für geeignete Verbindungen der allgemeinen Formel III sind Ester von Ethylenglykol, Diethylenglykol, Propylenglykol, Dipropylenglykol, von ($C_1$ bis $C_4$)-Monoalkylethern des Ethylenglykols, Diethylenglykols, Propylenglykols, Dipropylenglykol mit einer $C_1$ bis $C_4$ Carbonsäure. Die Carbonsäure kann dabei geradkettig oder verzweigt und/oder gesättigt oder ungesättigt sein. Die Carbonsäure ist vorzugsweise Essigsäure. Als Beispiele seien genannt: Ethylenglykol-monoacetat, Propylenglykol-monoacetat, Diethylenglykol-monoacetat, Dipropylenglykol-monoacetat, Ethylenglykol-diacetat, Propylenglykol-diacetat, Diethylenglykol-diacetat, Dipropylenglykol-diacetat, Ethyl-diglykol-acetat, Butyl-diglykolacetat, Ethyl-dipropylenglykol-acetat, Butyldipropylenglykol-acetat.

Als Komponente C sind vollständig mit Wasser mischbare Lösungsmittel bevorzugt, insbesondere solche der Formel III.

Von den Verbindungen der Formel III sind besonders bevorzugt: Butylglykol, Methyldiglykol, Butyldiglykol, Butylglykolacetat, Butyldiglykolacetat, Polyethylenglykol (Molmasse bis 600).

Die Verbindungen der Formel III können in Mischungen untereinander oder in Mischungen mit anderen Vertretern der Komponente C eingesetzt werden.

Da vorzugsweise ein Teil der Komponente C durch Wasser ersetzt werden kann, können wasserhaltige oder im Gemisch mit Wasser oder in wäßriger Lösung vorliegende Komponenten B und/oder C direkt zur Herstellung der erfindungsgemäßen Zubereitung eingesetzt werden. In der erfindungsgemäßen Zubereitung kann z.B. bis zu 60 Gew.% vorzugsweise bis zu 55 Gew.%, der Komponente C durch Wasser ersetzt sein.

Zur Herstellung der erfindungsgemäßen Zubereitungen werden die Komponenten A, B und C und gegebenenfalls Wasser miteinander vermischt, was z.B. durch Rühren erfolgen kann. Zur Beschleunigung der Auflösung des Mctt kann es zweckmäßig sein, das Vermischen bei erhöhter Temperatur, von z.B. bis 60°C, durchzuführen. Bei der Vermischung werden die Komponenten A, B und C im Gewichtsverhältnis (A + B) : C = (10 bis 80) : (90 bis 20), vorzugsweise (20 bis 50) : (80 bis 50) und ganz besonders bevorzugt (25 bis 50) (75 bis 50) miteinander gemischt, wobei ein Gewichtsverhältnis A : B = 1 : (2 bis 100), vorzugsweise 1 : (3 bis 20) und ganz besonders bevorzugt 1 : (5 bis 10) eingehalten wird.

Die erfindungsgemäßen Zubereitungen sind stabile, klare Lösungen. Sie werden normalerweise kurz vor der Anwendung mit Wasser, z.B. im Gewichtsverhältnis 1 : (4 bis 999), auf einen Konzentratgehalt von 20 bis 0,1 Gew.% verdünnt. Derartige wäßrige Verdünnungen sind mindestens 2 Stunden stabil, ohne daß unlösliches Mctt ausfällt.

Die auf Anwendungskonzentration verdünnten erfindungsgemäßen Zubereitungen werden in geeigneter Weise, z.B. durch Walzen, Streichen, Bürsten, Sprühen, Spritzen oder dergleichen, auf die zu behandelnden Flächen aufgebracht, auf denen ein Bewuchs an Algen, Moosen und/oder Flechten beseitigt und/oder verhindert werden soll.

Die erfindungsgemäßen Zubereitungen können neben den bisher genannten Bestandteilen auch noch einen weiteren Bestandteil oder weitere Bestandteile, so z.B. ein oder mehrere Netzmittel, Hydrophobierungsmittel, filmbildende Mittel, wie Kunststoffdispersionen und/oder ein oder mehrere andere biozid wirksame Verbindungen etc. enthalten, die bei der Herstellung der Zubereitungen während oder nach dem

Vermischen zugefügt werden. Beispielsweise kann der Zusatz eines oder mehrerer Hydrophobierungsmitel, wie z.B. von Kaliummethylsilikonat, die Standzeit einer behandelten Fläche bis zum Neubewuchs weiter bedeutend erhöhen.

Durch die Anwendung der erfindungsgemäßen Zubereitungen in wäßrig verdünnten Lösungen gelingt eine einfache, rasche, sichere und umweltschonende Sanierung von algen-, moos- bzw. flechtenbewachsenen Flächen und ein Schutz für längere Zeit vor erneutem Bewuchs. Überraschenderweise wurde auch eine synergistisch gesteigerte Wirkung der erfindungsgemäßen Formulierungen im Vergleich mit den quaternären Verbindungen oder dem Mctt als allein eingesetzte Wirkstoffe gefunden.

Die in den nachfolgenden Beispielen angegebenen Prozente sind Gewichtsprozente.

Beispiel 1:

60 g Mctt werden in einem Gefäß mit 600 g eines Handelsproduktes, das 50 % Didecyldimethylammoniumchlorid, 20 % iso-Propanol und 30 % Wasser enthält, und 340 g Butyldiglykolacetat durch Rühren bei 50°C gemischt.

Es wird so eine erfindungsgemäße Zubereitung in Form einer klaren, farblosen Lösung erhalten, die aus 6 % Mctt, 30 % Didecyldimethylammoniumchlorid, 34 % Butyldiglykolacetat, 12 % iso-Propanol und 18 % Wasser besteht.

Die Zubereitung läßt sich mit Trinkwasser beispielsweise im Gewichtsverhältnis 1 : (4 bis 999) zu klaren wäßrigen Lösungen verdünnen, welche die Zubereitung zu 20 bis 0,1 Gew.% enthalten. Die Verdünnungen sind mindestens 2 Stunden stabil, ohne daß das in Wasser unlösliche Mctt ausfällt.

Beispiel 2:

In analoger Weise wie im Beispiel 1 angegeben wird eine Zubereitung hergestellt, die
3 % Mctt
30 % Didecyldimethylammoniumchlorid,
20 % Butyldiglykolacetat,
12 % iso-Propanol,
35 % Wasser
enthält und beim Verdünnen mit Wasser gleich gute Eigenschaften wie die Zubereitung des Beispiels 1 besitzt.

Beispiel 3:

In analoger Weise wie im Beispiel 1 angegeben wird eine Zubereitung hergestellt, die
6 % Mctt,
30 % Didecyldimethylammoniumchlorid,
34 % Butyldiglykol,
12 % iso-Propanol,
18 % Wasser
enthält und beim Verdünnen mit Wasser gleich gute Eigenschaften wie die Zubereitung des Beispiels 1 besitzt.

Beispiel 4:

In analoger Weise wie im Beispiel 1 angegeben wird eine Zubereitung hergestellt, die
5 % Mctt,
40 % Dodecyl-benzyl-dimethylammoniumchlorid • $2H_2O$,
45 % Methylethylketon,
10 % Wasser
enthält und beim Verdünnen mit Wasser gleich gute Eigenschaften wie die Zubereitung des Beispiels 1 besitzt.

Beispiel 5:

In analoger Weise wie im Beispiel 1 angegeben wird eine Zubereitung hergestellt, die
3 % Mctt,
30 % ($C_{12}$-$C_{18}$)-Alkyl-benzyl-dimethylammoniumchlorid
37 % Butyldiglykolacetat,
30 % Wasser,
enthält und beim Verdünnen mit Wasser gleich gute Eigenschaften wie die Zubereitung des Beispiels 1 besitzt.

Beispiel 6:

In analoger Weise wie im Beispiel 1 angegeben wird eine Zubereitung hergestellt, die
3 % Mctt,
25 % Didecyldimethylammoniumchlorid,
47 % Polyethylenglykol 300,
10 % iso-Propanol,
15 % Wasser,
enthält und beim Verdünnen mit Wasser gleich gute Eigenschaften wie die Zubereitung des Beispiels 1 besitzt.

Beispiel 7:

In analoger Weise wie im Beispiel 1 angegeben wird eine Zubereitung hergestellt, die
3 % Mctt,
30 % Hexadecyltrimethylphosphoniumchlorid,
60 % Methyldiglykol,
7 % Wasser,
enthält und beim Verdünnen mit Wasser gleich gute Eigenschaften wie die Zubereitung des Beispiels 1 besitzt.

Beispiel 8:

Zum experimentellen Nachweis der Wirksamkeit gegen Algen und Moose auf einem aus verdichtetem Backsteingranulat bestehenden Tennisplatzboden werden dem Tennisplatzboden 20 x 20 cm große Proben mit vollständigem Bewuchs mit Algen und Moosen entnommen.

Eine Probe wird auf der Oberfläche mit einer frisch hergestellten Lösung der Zubereitung des Beispiels 1 - Konzentration 1 % in Wasser - so besprüht, daß auf die Oberfläche 750 g/m² der Verdünnung (7,5 g/m² der Formulierung 1 des Beispiels 1) aufgebracht werden.

Das Granulat wird in feuchter Atmosphäre (90 % relative Luftfeuchte, 25°C) in einer Petrischale gelagert. Nach 2, 4 und 8 Tagen werden Proben entnommen und auf Wuchsfähigkeit der behandelten Algen und Moose geprüft. Dazu werden die Proben auf einen Algennährboden nach Knop (1) aufgelegt. Enthält die Probe wuchsfähige Algen bzw. Moose, so wachsen diese unter den optimalen Wuchsbedingungen auf den Nährboden aus.

Nicht abgetötete Algen und Moose behalten ihre grüne Färbung, während die abgestorbenen Algen bzw. Moose nach kurzer Zeit eine Braunfärbung annehmen.

Als Vergleichsproben dienen eine unbehandelte Probe b) des Tennisplatzbodens, sowie eine Probe c),

(1) Der Nährboden nach Knop wird die folgt hergestellt:
1,0 g Calciumnitrat-4-hydrat,
0,25 g Kaliumhydrogenphosphat,
0,25 g Magnesiumsulfat-7-hydrat,
0,01 g Eisen-(III)-chlorid-6-y=hydrat und
0,25 g Kaliumchlorid
werden mit destilliertem Wasser zu 1000 ml gelöst. Zur Verfestigung des Nährmediums dient 1 g Agar-Agar.

die mit 750 g/m² einer 0,6%igen wäßrigen Lösung eines Konzentrats, das 50 % Didecyldimethylammoniumchlorid, 20 % iso-Propa nol und 30 % Wasser enthält, besprüht worden ist, sowie eine Probe d), die mit 750 g/m² einer 0,06%igen Aufschlämmung von Mctt in Wasser besprüht worden ist.

Es werden folgende Ergebnisse erhalten:

| Probe | Behandlungszeit | | |
|---|---|---|---|
| | 2 Tage | 4 Tage | 8 Tage |
| a) | grün<br>Algen und Moose<br>nicht wuchsfähig | braun<br>Algen und Moose<br>nicht wuchsfähig | braun<br>Algen und Moose<br>nicht wuchsfähig |
| b) | grün<br>Algen und Moose<br>gut wuchsfähig | grün<br>Algen und Moose<br>gut wuchsfähig | grün<br>Algen und Moose<br>gut wuchsfähig |
| c) | grün<br>Algen und Moose<br>wuchsfähig | grün-braun<br>Algen und Moose<br>nicht wuchsfähig | braun<br>Algen und Moose<br>nicht wuchsfähig |
| d) | grün<br>Algen und Moose<br>gut wuchsfähig | grün<br>Algen und Moose<br>gut wuchsfähig | grün<br>Algen und Moose<br>gut wuchsfähig |

<u>Beispiel 9:</u>

Laborversuch zum Nachweis der andauernden Wirkung gegen den erneuten Bewuchs mit Algen.

Zum Nachweis der überlegenen Dauerwirkung einer erfindungsgemäßen Zubereitung werden Papierfilze (Durchmesser 7 cm) mit frisch hergestellten Verdünnungen (Probe a) 1%ig, Probe b) 2%ig) der Zubereitung des Beispiels 3 getränkt, so daß jeweils 100 g/m² der Lösung von den Papierfilzen aufgenommen wurde.

Die Papierfilze werden anschließend an der Luft getrocknet. Zur Auslaugung der Wirkstoffe werden die Filze in Leitungsw18ser gewässert, dabei wird das Wasser nach jeder Stunde erneuert.

Nach 2, 8 und nach 24 Stunden Wässerung werden die Papierfilze getrocknet, unter UV-Licht sterilisiert und in Petrischalen auf Nährböden nach Knop (siehe Anmerkung 1) im Beispiel 8 aufgelegt.

Diese Papierfilze werden nun mit einer Algenlösung beimpft. Nach 14 Tagen wird das Algenwachstum auf den Papierfilzen nach folgendem Schema beurteilt:

0 = Papierfilz nicht bewachsen

1 = Papierfilz mit Algen bewachsen

Die Auslaugbeständigkeit eines Wirkstoffes äußert sich durch die Wirksamkeit auch nach Auswaschbeanspruchung.

Als Vergleich dienen: c) eine wäßrige Lösung von 0,6 % Didecyldimethylammoniumchlorid in Wasser (gleiche Wirkstoffkonzentration wie Probe b)), sowie d) eine wäßrige Aufschlämmung von 0,12 % McH in Wasser (gleiche Wirkstoffkonzentration wie Probe b)).

Die Ergebnisse sind in der folgenden Tabelle zusammengefaßt. Sie belegen die Überlegenheit einer erfindungsgemäßen Formulierung:

| Probe | Konzentration | Auslaugzeit | Wachstum auf dem Probekörper |
|---|---|---|---|
| a) | | | |
| Zubereitung des Beispiels 3 | 1,0 % | 0 Stunden<br>2 Stunden<br>8 Stunden<br>24 Stunden | 0<br>0<br>0<br>1 |
| b) | | | |
| Zubereitung des Beispiels 3 | 2,0 % | 0 Stunden<br>2 Stunden<br>8 Stunden<br>24 Stunden | 0<br>0<br>0<br>0 |
| c) | | | |
| Vergleichsbeispiel: Didecyldimethylammoniumchlorid | 0,6 % | 0 Stunden<br>2 Stunden<br>8 Stunden<br>24 Stunden | 0<br>0<br>1<br>1 |
| d) | | | |
| Vergleichsbeispiel: Mctt | 0,12 % | 0 Stunden<br>2 Stunden<br>8 Stunden<br>24 Stunden | 0<br>1<br>1<br>1 |
| Blindprobe ohne Wirkstoff | 0,0 % | 0 Stunden<br>2 Stunden<br>8 Stunden<br>24 Stunden | 1<br>1<br>1<br>1 |

Beispiel 10:

Praxisversuch, Sanierung eines algenbewachsenen Fußweges.

Ein vollständig mit Algen bewachsener, mit Zementsteinplatten belegter Fußweg wird nach Entfernung des lose aufliegenden Schmutzes mit einem Besen mit einer Lösung von 2,0 % der Zubereitung des Beispiels 3 in Wasser mit Hilfe einer Handspritze, die normalerweise zur Schädlingsbekämpfung im Gartenbau Anwendung findet, behandelt. Es werden so ca. 100 g der Lösung pro $m^2$ aufgebracht.

Als Vergleich dient ein gleichartiger Teil des Weges, der in exakt der gleichen Weise behandelt wird, wobei anstelle der Zubereitung des Beispiels 3 eine 1,2%ige wäßrige Lösung eines Konzentrats aus 50 % Didecyldimethylammoniumchlorid, 20 % iso-Propanol, 30 % Wasser (d.h. gleicher Wirkstoffgehalt wie bei Zubereitung des Beispiels 3) aufgebracht wird.

Nach 6 Monaten ist die mit der erfindungsgemäßen Zubereitung behandelte Fläche noch völlig frei von Bewuchs mit Algen oder Moosen, während die Vergleichsfläche wieder deutlich durch Algenbewuchs grün gefärbt ist.

Beispiele 11 bis 16 (Vergleichsbeispiele)

Durch Auflösen von Mctt in den nachfolgend genannten organischen Lösungsmitteln, gegebenenfalls unter Erwärmen, und gegebenenfalls Zusatz von Wasser werden die folgenden Konzentrate hergestellt:

Beispiel 11:

30g Mctt in 470 g Butyldiglykolacetat.

Beispiel 12:

30 g Mctt in 470 g Butyldiglykol.

Beispiel 13:

50 g Mctt in 950 g Methylethylketon.

Beispiel 14:

30 g Mctt in 970 g Butyldiglykolacetat.

Beispiel 15:

30 g Mctt in 970 g Polyethylenglykol 300.

Beispiel 16:

30 g Mctt in 620 Methyldiglykol und 350 g Wasser.

Die Konzentrate der Beispiele 11 bis 16 wurden mit Trinkwasser auf 20 %, 10 %, 1 % und 0,1 % Konzentratgehalt verdünnt. Sie scheiden dabei unmittelbar nach der Verdünnung mit Wasser Mctt als grobkristallinen Bodensatz ab.

## Ansprüche

1. Flüssige, insbesondere algicid wirkende Zubereitung, enthaltend

a) als Komponente A: 2-Methylthio-4-cyclopropylamino-6-tertiärbutylamino-1,3,5-triazin der Formel I

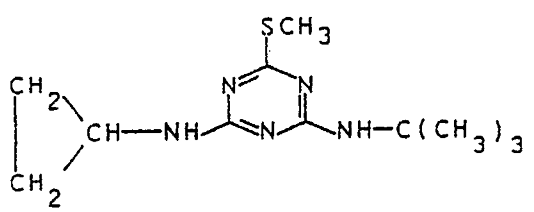

(I)

b) als Komponente B: mindestens eine biozid wirksame quaternäre Ammonium- oder Phosphoniumverbindung,

c) als Komponente C: mindestens ein mit Wasser mischbares Lösemittel,

wobei die Zubereitung die Komponenten (A + B) zu 10 bis 80 Gew.% enthält und das Gewichtsverhältnis A : B = 1 : (2 bis 100) beträgt.

2. Zubereitung nach Anspruch 1, dadurch gekennzeichnet, daß das Gewichtsverhältnis A : B = 1 : (3 bis 20), vorzugszweise 1 : (5 bis 10), beträgt.

3. Zubereitung nach Anspruch 1 und/oder 2, dadurch gekennzeichnet, daß die Komponenten (A + B) zu 20 bis 50 Gew.%, vorzugsweise zu 25 bis 40 Gew.%, in der Zubereitung enthalten sind.

4. Zubereitung nach einem oder mehreren der Ansprüche 1 bis 3, dadurch gekennzeichnet, daß die Komponente C bis zu 60 Gew.%, vorzugsweise bis zu 55 Gew.%, durch Wasser ersetzt ist.

5. Zubereitung nach einem oder mehreren der Ansprüche 1 bis 4, dadurch gekennzeichnet, daß sie als

Komponente B mindestens eine Verbindung der Formel II

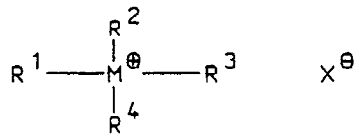 (II)

enthält, worin
M Stickstoff oder Phosphor und
X⊖ ein Anion
bedeuten und wobei von den Resten $R^1$ bis $R^4$ mindestens einer höhermolekularer Natur ist, z.B. einen aliphatischen Rest mit 8 bis 22 C-Atomen, vorzugsweise 8 bis 18 C-Atomen, bedeutet, und durch Heteroatome und/oder durch Ester- und/oder Amidbrücken unterbrochen oder über einen aromatischen Rest oder über ein heterocyclisches Ringsystem an das quaternäre Atom M⊕ gebunden sein kann, und die drei anderen Reste entweder je einen gegebenenfalls substituierten und/oder ein- oder mehrfach durch Sauerstoff unterbrochenen aliphatischen Rest mit jeweils 1 bis 12 C-Atomen, vorzugsweise 1 bis 10 C-Atomen, ganz besonders bevorzugt Methyl, gegebenenfalls substituiertes Aryl oder Aralkyl bedeuten oder 2 oder 3 der verbleibende Reste zusammen mit dem quaternären Atom M⊕, an das sie gebunden sind, einen gegebenenfalls ein- oder mehrfach substituierten heterocyclischen Ring bilden.

6. Zubereitung nach einem oder mehreren der Ansprüche 1 bis 5, dadurch gekennzeichnet, daß sie als Komponente B eine quaternäre Ammoniumverbindung enthält.

7. Zubereitung nach einem oder mehreren der Ansprüche 1 bis 6, dadurch gekennzeichnet, sie als Komponente C eine Verbindung der Formel III
$R^9$-X-$R^{10}$ (III)
enthält, worin
X den Rest der Formel

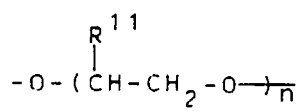 oder

den über zwei Sauerstoffatome gebundenen Rest eines Polyethylenglykol-Polypropylenglykolkondensats,
$R^9$, $R^{10}$ unabhängig voneinander Wasserstoff, $C_1$-$C_{18}$-Alkyl oder den Acylrest einer $C_1$-$C_4$-Carbonsäure oder ($C_1$-$C_{10}$)Alkyl-phenyl,
$R^{11}$ Wasserstoff oder Methyl,
n eine Zahl von 1 bis 13, vorzugsweise 1 bis 10,
bedeuten.

8. Zubereitung nach einem oder mehreren der Ansprüche 1 bis 7, dadurch gekennzeichnet, daß die Komponente C vollständig mit Wasser mischbar ist.

9. Verfahren zur Herstellung einer Zubereitung eines oder mehrerer der Ansprüche 1 bis 8, dadurch gekennzeichnet, daß die in einem oder mehreren der Ansprüche 1 bis 8 angegebenen Komponenten A, B und C und gegebenenfalls Wasser im Gewichtsverhältnis (A + B) : C = (10 bis 80) : (90 bis 20), vorzugsweise (20 bis 50) : (80 bis 50) und ganz besonders bevorzugt (25 bis 50) : (75 bis 50) miteinander gemischt werden, wobei ein Gewichtsverhältnis
A : B = 1 : (2 bis 100), vorzugsweise 1 : (3 bis 20) und ganz besonders bevorzugt 1 : (5 bis 10), eingehalten wird, wobei bis zu 60 Gew.%, vorzugsweise bis zu 55 Gew.% der Komponente C durch Wasser ersetzt sein können und daß während oder nach dem Vermischen gegebenenfalls noch ein oder mehrere weitere Bestandteile zugefügt werden.

10. Auf eine Anwendungskonzentration von 20 bis 0,1 Gew.% mit Wasser verdünnte Zubereitung eines oder mehrerer der Ansprüche 1 bis 8.

11. Verwendung einer auf Anwendungskonzentration mit Wasser verdünnten Zubereitung gemäß Anspruch 10 zur Beseitigung und/oder Verhinderung eines Bewuchses an Algen, Moosen und/oder Flechten.

Patentansprüche für folgende Vertragsstaat: ES

1. Verfahren zur Herstellung einer flüssigen, insbesondere algicid wirkenden Zubereitung, dadurch gekennzeichnet, daß
a) als Komponente A: 2-Methylthio-4-cyclopropylamino-6-tertiärbutylamino-1,3,5-triazin der Formel I

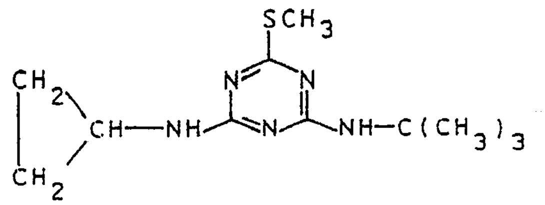
(I)

b) als Komponente B: mindestens eine biozid wirksame quaternäre Ammonium- oder Phosphoniumverbindung,
c) als Komponente C: mindestens ein mit Wasser mischbares Lösemittel,
und gegebenenfalls Wasser im Gewichtsverhältnis (A + B) : C = (10 bis 80) : (90 bis 20) miteinander gemischt werden, wobei ein Gewichtsverhältnis A : B = 1 : (2 bis 100) eingehalten wird und bis zu 60 Gew.% der Komponente C durch Wasser ersetzt werden können und daß während oder nach dem Vermischen gegebenenfalls noch ein oder mehrere weitere Bestandteile zugefügt werden.

2. Verfahren nach Anspruch 1, dadurch gekennzeichnet, daß ein Gewichtsverhältnis A : B = 1 : (3 bis 20), vorzugsweise 1 : (5 bis 10) eingehalten wird.

3. Verfahren nach Anspruch 1 und/oder 2, dadurch gekennzeichnet, daß die Komponenten in solchen Gewichtsverhältnissen miteinander gemischt werden, daß die Zubereitung die Komponenten (A + B) zu 20 bis 50 Gew.%, vorzugweise zu 25 bis 40 Gew.%, enthält.

4. Verfahren nach einem oder mehreren der Ansprüche 1 bis 3, dadurch gekennzeichnet, daß die Komponente C bis zu 55 Gew.%, durch Wasser ersetzt ist.

5. Verfahren nach einem oder mehreren der Ansprüche 1 bis 4, dadurch gekennzeichnet, daß als Komponente B mindestens eine Verbindung der Formel II

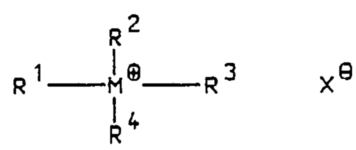
(II)

verwendet wird, worin
M Stickstoff oder Phosphor und
X⊖ ein Anion
bedeuten und wobei von den Resten $R^1$ bis $R^4$ mindestens einer höhermolekularer Natur ist, z.B. einen aliphatischen Rest mit 8 bis 22 C-Atomen, vorzugsweise 8 bis 18 C-Atomen, bedeutet, und durch Heteroatome und/oder durch Ester- und/oder Amidbrücken unterbrochen oder über einen aromatischen Rest oder über ein heterocyclisches Ringsystem an das quaternäre Atom M⊕ gebunden sein kann, und die drei anderen Reste entweder je einen gegebenenfalls substituierten und/oder ein- oder mehrfach durch Sauerstoff unterbrochenen aliphatischen Rest mit jeweils 1 bis 12 C-Atomen, vorzugsweise 1 bis 10 C-Atomen, ganz besonders bevorzugt Methyl, gegebenenfalls substituiertes Aryl oder Aralkyl bedeuten oder 2 oder 3 der verbleibende Reste zusammen mit dem quaternären Atom M⊕, an das sie gebunden sind, einen gegebenenfalls ein-oder mehrfach substituierten heterocyclischen Ring bilden.

6. Verfahren nach einem oder mehreren der Ansprüche 1 bis 5, dadurch gekennzeichnet, daß als Komponente B eine quaternäre Ammoniumverbindung verwendet wird.

7. Verfahren nach einem oder mehreren der Ansprüche 1 bis 6, dadurch gekennzeichnet, daß als Komponente C eine Verbindung der Formel III

$R^9$-X-$R^{10}$ (III)

verwendet wird, worin
X den Rest der Formel

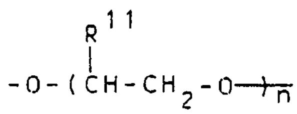 oder

den über zwei Sauerstoffatome gebundenen Rest eines Polyethylenglykol-Polypropylenglykolkondensats,
$R^9$, $R^{10}$ unabhängig voneinander Wasserstoff, $C_1$-$C_{18}$-Alkyl oder den Acylrest einer $C_1$-$C_4$-Carbonsäure oder ($C_1$-$C_{10}$)Alkyl-phenyl,
$R^{11}$ Wasserstoff oder Methyl,
n eine Zahl von 1 bis 13, vorzugsweise 1 bis 10,
bedeuten.

8. Verfahren nach einem oder mehreren der Ansprüche 1 bis 7, dadurch gekennzeichnet, daß eine Komponente C verwendet wird, die vollständig mit Wasser mischbar ist.

9. Verfahren zur Beseitigung und/oder Verhinderung eines Bewuchses an Algen, Moosen und/oder Flechten, dadurch ge kennzeichnet, daß eine nach einem oder mehreren der Ansprüche 1 bis 8 hergestellte Zubereitung auf eine Anwendungskonzentration von 20 bis 0,1 Gew.% mit Wasser verdünnt wird und diese Lösung auf die zu behandelnde Flächen aufgebracht wird.

Europäisches Patentamt

# EUROPÄISCHER RECHERCHENBERICHT

Nummer der Anmeldung

EP 90101122.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| A | GB - A - 2 178 960 (ALBRIGHT & WILSON LIMITED) * Patentansprüche * -- | 1,5,11 | A 01 N 43/70<br>A 01 N 57/20<br>A 01 N 33/12 |
| D,A | DE - A1 - 3 539 118 (CIBA-GEIGY AG) * Zusammenfassung * -- | 1,5,11 | |
| A | EP - A2 - 0 223 029 (HOECHST AKTIENGESELLSCHAFT) * Zusammenfassung * -- | 1,11 | |
| A | EP - A2 - 0 036 106 (HOECHST AKTIENGESELLSCHAFT) * Anspruch 1 * ---- | 1,5,11 | |

RECHERCHIERTE SACHGEBIETE (Int Cl 5)

A 01 N

Der vorliegende Recherchenbericht wurde für alle Patentansprüche erstellt.

| Recherchenort | Abschlußdatum der Recherche | Prüfer |
|---|---|---|
| WIEN | 26-03-1990 | SCHNASS |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82